# EUROPEAN PATENT SPECIFICATION

(11) **EP 3 200 665 B1**
(45) Date of publication and mention of the grant of the patent: **08.01.2025**
(21) Application number: 15778523.9
(22) Date of filing: 29.09.2015
(51) Int. Cl.: A47J 36/24, A47J 39/02

(54) **FOOD HOLDING APPARATUS AND METHOD**
VORRICHTUNG UND -VERFAHREN ZUM HALTEN VON LEBENSMITTELN
APPAREIL ET PROCÉDÉ DE SUPPORT D'ALIMENTS

(30) Priority: 02.10.2014 US 201462058797 P; 01.07.2015 US 201562187511 P; 23.09.2015 US 201514862770
(43) Date of publication of application: 09.08.2017
(73) Proprietor: Illinois Tool Works Inc., Glenview, IL 60025 (US)
(72) Inventor: STORIZ, Paul, J., Glenview, IL 60025 (US); STERNLIEB, Paul, E., Glenview, IL 60025 (US); GULKANAT, Bektas, C., Glenview, IL 60025 (US)
(74) Representative: Meissner Bolte Partnerschaft mbB
(86) International application number: PCT/US2015/052774
(87) International publication number: WO 2016/053932

(56) References cited:
- GB-A- 1 273 217
- US-A- 3 965 969
- US-A- 4 068 115
- US-A1- 2002 066 723
- US-A1- 2011 297 665

## Description

This application claims the priority of U.S. Provisional Application Serial Nos. 62/058,797, filed October 2, 2014, and 62/187,511, filed July 1, 2015, and U.S. Patent Application Serial No. 14/862,770, filed September 23, 2015.

### TECHNICAL FIELD

This application relates generally to food preparation and handling and, more specifically, to a food holding apparatus comprising a food holding tray/bin unit for holding cooked food at an acceptable temperature.

### BACKGROUND

Food holding bins are commonly used at quick serve restaurants (QSRs) in order to keep a quantity of hot food items ready-to-serve to meet customer orders. For example, a burger chain may grill a batch of hamburgers then place them in a food holding bin until a customer places an order, at which time one or more of the hamburgers are retrieved from the food holding bin and assembled into one or more sandwiches. Typically, holding bins contain multiple open drawers (bins) that can be accessed from either side of the device and are heated with radiant heaters attached to the top, bottom, and/or intermediate shelves of the device.

These heaters are controlled to a constant temperature, typically above 55C and up to 125C.

While effective in keeping the food warm, these heaters have the adverse effect of drying out the food over time, resulting in restaurants having to discard unsold food on a regular schedule to maintain quality. Also, though bin covers are available, they are often not used due to the added effort required to remove and reseal the cover each time food is accessed. The bins are also arranged in the cabinet in an open configuration to allow thermal heat transfer (radiant and convective) from the heater to the bin and ultimately to the food. This leaves multiple pathways for heated air to escape to the surrounding environment resulting in a relatively inefficient device. Radiant heaters also require a temperature sensor or controller to regulate the thermal energy output which adds cost and complexity. Finally, since the temperature sensor is located away from the thermal load, there is often a lag in response time that makes precise temperature control difficult to achieve. This often causes food to be over-heated as the system readjusts each time bins are taken in or out.

Therefore, it is desirable to have a food storage apparatus that can hold food at a preset temperature for a greater length of time and that can maintain moisture in the food by preventing moisture loss, thereby increasing food storage duration for cooked foods and reducing waste resulting from throwing away dried and overheated food. It is also desirable to have a food storage apparatus that can increase heating efficiency, thereby reducing energy costs.

As a result of these issues, companies are considering more made-to-order cooking models, reducing the need for holding bins that hold the food product for long periods of time. However, even in such food production environments, there may be short time periods during which it is necessary to maintain food product at suitable temperatures without drying out the food products. Thus, alternatives to food holding bins are also needed.

The document US 4,068,115 A relates to a food serving system for delivering prepared meals to locations remote from the point of preparation, such as to patients in hospitals and nursing homes, which includes a mobile cart having its own low voltage rechargeable power pack that may be utilized to make the cart self powered.

The document GB 1 273 217 A relates to a device and a system for storing and for cooking or reconstituting food. "Reconstitution" means the application of heat to cook and/heat food to edible condition after fresh or pre-cooked food has been frozen, chilled, retained in semi-heated state or otherwise treated to prevent spoilage.

The document US 2002/066723 A1 relates to a heater unit mounted on a tray that comprises a PTC heater having a positive temperature coefficient (PTC) and a sheet heater superposed thereto.

### SUMMARY

The present invention relates to a food holding apparatus as defined by independent claim 1, wherein further developments of the inventive food holding apparatus are provided in the sub-claims, respectively.

According to the invention, a food holding apparatus includes a food holding device in the form of a bin structure.

At least one heating element is associated with the food holding device, where the heating element comprises a positive temperature coefficient heater characterized by an electrical resistance that increases with increasing temperature such that the positive temperature coefficient heater provides higher heating power at lower temperatures and lower heating power at higher temperatures.

According to an alternative that does not fall under the scope of the claims, a food holding apparatus includes a plate structure having an upper surface for receiving food products thereon, the plate structure including at least one associated heating element that operates for heating the plate structure in order to heat food products on the upper surface in a localized manner that is dependent upon the actual temperature of each food product.

In another aspect, a method of holding a cooked food product in preparation for final use of the food product to prepare a food item is provided. The method involves the steps of: utilizing a plate structure having an upper surface for receiving food products thereon, the plate structure including at least one associated heating element; placing multiple items of cooked food product on the upper surface; and the heating element delivers heat to the plate structure according to the changing temperature of the plate structure under the food product load.

According to the invention, the food holding apparatus includes a cabinet having a power source and at least two support rails having rail electrical contacts, where the support rail is coupled to the cabinet and the rail electrical contacts are electrically coupled to the power source. In an implementation, the food holding bin has at least one lip and bin electrical contacts disposed on the lip, wherein the food holding bin engages with the support rail such that the lip is supported by the support rail. A heating element is associated with at least one wall that forms the food holding bin and electrically coupled to the bin electrical contacts. The bin electrical contacts are disposed at a position such that, when the food holding bin is engaged with the support rail, the bin electrical contacts engage the rail electrical contacts to form a circuit electrically coupling the heating element to the power source.

According to the invention, the heating element comprises a PTC heater.

In the present invention, a temperature sensor is disposed in the food holding bin and a controller electrically coupled to the temperature sensor and the power supply. The controller modulates the power supply to the heating element in response to a temperature measured by the temperature sensor.

In an implementation of the foregoing aspect, bin sensor contacts are disposed on the at least one lip of the food holding bin, wherein the bin sensor contacts are electrically coupled to a temperature sensor. Rail sensor contacts are disposed on the at least one support rail, wherein the rail sensor contacts engage the bin sensor contacts when the food holding bin is engaged with the at least one support rail. A controller is electrically coupled to the rail sensor contacts and the power supply, and the controller modulates the power supply to the heating element in response to a temperature measured by the temperature sensor. In one example, the at least one lip has a lower surface and the bin electrical contacts are disposed along the lower surface, wherein the at least one support rail has an upper surface and the rail electrical contacts are disposed on the upper surface of the support rail, wherein the bin electrical contacts on the lower surface of the at least one lip engage with the rail electrical contacts on the upper surface of the at least one support rail when the food holding bin is engaged with the at least one support rail.

In another implementation of the foregoing aspect, the food holding apparatus includes a cover. In one example, the food holding bin further includes a seal disposed between the food holding bin and the cover, wherein the seal makes a generally air tight interface between the food holding bin and the cover when the food holding bin is engaged with the at least one support rail. In one example, the seal is an elastomeric seal. In one example, a steam port is also associated with the cover. The cover can also be incorporated as part of the holding cabinet, so that the tray seal forms an air tight interface when the holding tray/bin is inserted into the holding cabinet. A shelf surface can also act to seal against the holding bin.

In another aspect, a food holding bin includes a bottom wall and a plurality of upright side walls, wherein at least one of the plurality of upright side walls has a lip and wherein the bottom wall and the upright side walls form a food holding volume. The food holding bin has a heating element associated with one or more of the bottom wall and the plurality of side walls and electrical contacts electrically coupled to the heating element.

In another aspect, a method of holding a cooked food product in preparation for final use of the food product to prepare a food item is provided. The method involves: utilizing a food holding structure having a surface for receiving food products thereon, the food holding structure structure including at least one associated heating element; placing multiple items of cooked food product on the surface; the heating element delivers heat the food holding structure according to changing temperature of the food holding structure under the food product load.

According to the invention, a food holding system includes a bin structure including a set of electrical contacts. The food holding cabinet has a plurality of bin receiving locations, and each bin receiving location sized to enable support of the bin structure at a holding position of the bin receiving location. Each bin receiving location includes a set of electrical contacts arranged for mating with the set of electrical contacts of the bin structure when the bin structure is located in the holding position of the bin receiving location.

According to the invention, the food holding cabinet has a plurality of bin receiving locations and a plurality of displays, each display associated with a respective bin receiving location. A controller is configured such that, when a bin structure is in a holding position of a particular bin receiving location, the controller effects display of information regarding the bin structure on the display associated with the particular bin receiving location.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1-4 depict one embodiment of an exemplary food holding apparatus in the form of a heating plate assembly that does not fall under the scope of the claim;
Figs. 5A and 5B depict exemplary PTC heating elements;
Fig. 6 is a graph showing the relationship between temperature and electrical resistance and power for an exemplary embodiment of a PTC heating element;
Figs. 7A and 7B show exemplary performance of the heating plate structure for maintaining food product temperature over time as compared to a non-heated surface;
Figs. 8-11 depict an example of a food holding apparatus in the form of a heating bin assembly that does not fall under the scope of the claims;
Figs. 12-14 depict a food holding apparatus and system according to the invention; and
Fig. 15 depicts another exemplary food holding apparatus and system.

### DETAILED DESCRIPTION

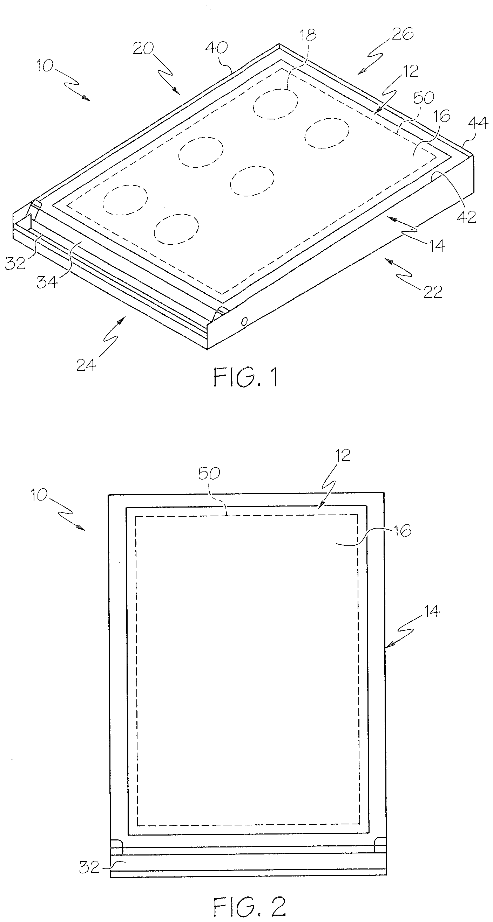

Referring to Figs. 1-4, a food holding plate unit or assembly 10 is shown and includes a plate structure 12 that is supported by a frame 14. The plate structure 12 includes an exposed upper or top surface 16 for holding food product 18. Circular hamburger patties are suggested by Fig. 1, but other food products could be held on the upper surface 16. The plate structure 12 may have any suitable thickness, and could be formed of simple sheet metal as well.

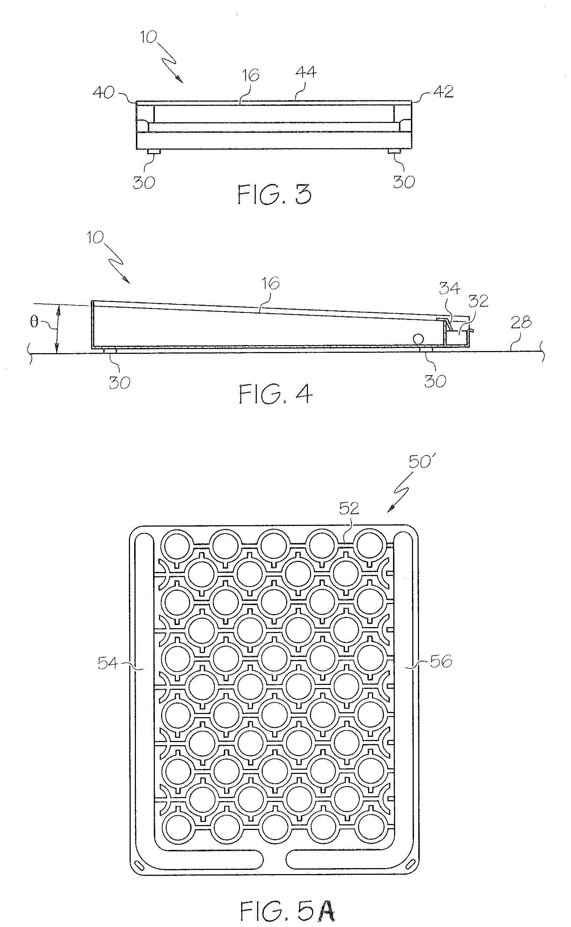

The support frame 14 includes left 20, right 22, front 24 and rear 26 sides. The plate structure 12 may be oriented such that, when the support frame 14 is seated on a horizontal surface 28 (e.g., supported by support feet 30 at the bottom of the support frame 14), the upper surface 16 of the plate structure is offset from horizontal and angles toward the front side of the support frame as best seen in Fig. 4, represented by angle Θ, which may, for example, be between about 1 degree and about 5 degrees (e.g., between about 2 degrees and about 4 degrees), but variations are possible.

In the illustrated embodiment, a grease collecting trough 32 extends along the front side of the support frame 14 for collecting grease that runs off of a front edge of the plate structure. The support frame 14 may include a lip 34 that extends downward from the front edge of the upper surface 16 of the plate to the trough 32 to facilitate the grease runoff into the trough 32. The grease trough 32 may be fixed in position on the frame 14 or, alternatively, may be removably connected to the frame 14 (e.g., by a snap fit, friction fit or interacting support flanges of the trough and frame) so that emptying of the grease trough 32 is facilitated.

The support frame 14 may also include upwardly extending lips 40, 42 and 44 along the left, right and rear sides, which lips extend upward beyond the upper surface of the plate structure. The lips aid in limiting or preventing food product grease or food product scraps from moving off of the unit 10 in the left, right or rear directions.

The plate structure 12 includes one or more associated heating element(s) 50, which may attached to or otherwise abut with the bottom or underside of the plate structure. The heating element operates for heating food products on the upper surface 16 in a localized manner that is responsive to actual temperature of each food product on the upper food holding surface. In an alternative arrangement, the heating element 50 may be embedded or sandwiched within the plate structure 12.

By way of example, the heating element may be a positive temperature coefficient (PTC) heater that inherently regulates the thermal energy transferred to the plate, and thus the food, in order to maintain a constant temperature. The food holding plate structure 12 is preferably a metal, such as stainless steel, or metal composite or laminate, that is scratch resistant and has adequate thermal conductivity properties.

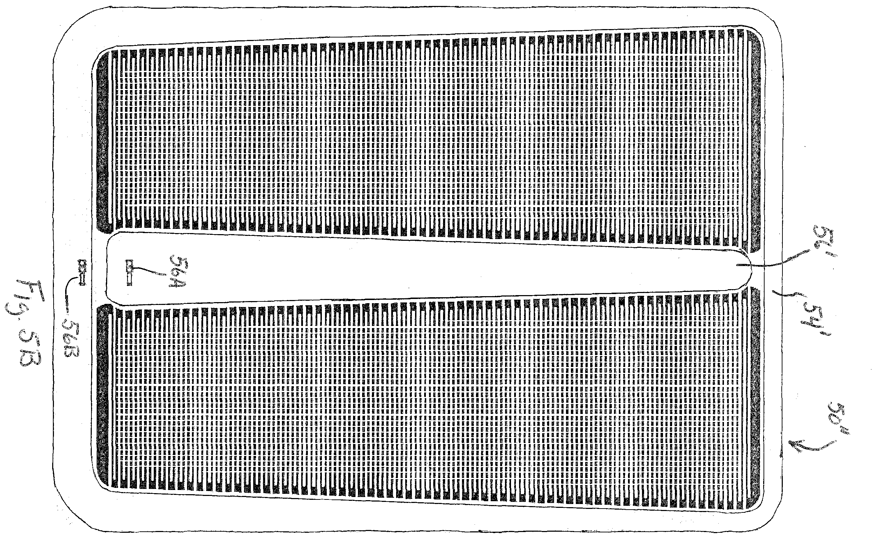

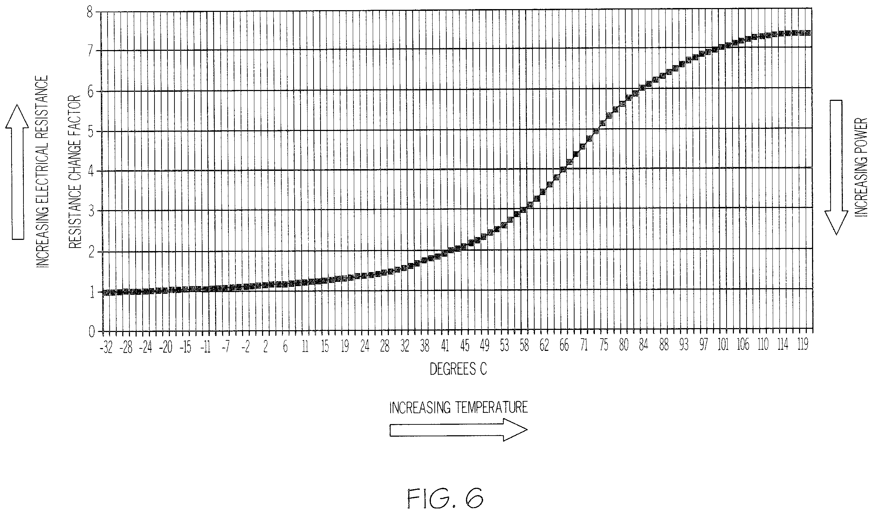

An exemplary PTC heater 50' is shown in Fig. 5A. In one example, heater 50' may be constructed using a polymeric PTC material 52 which is overlaid upon a conductive buss system (e.g., including positive bus 54 and negative bus 56) which is supported by a polymeric film substrate. The PTC material may be a blend of carbon black and polymer such that the concentrations are adjusted to achieve the proper heating characteristics in terms of wattage and steady state temperature. The PTC heater may be powered by a low voltage (e.g., 12V-48V DC) power source (either internal of the support frame or external) and may be configured to provide thermal energy of sufficient watt density to hold food at temperatures up to 120C. Another exemplary PTC heater 50" is shown in Fig. 5B where one of the buses (e.g., negative 54') surrounds the heater and the other bus (e.g., positive bus 56') is located in a center of the heater, with two discrete PTC material areas on the left and right sides of the center bus. Terminals 54A and 56A for the heater are also shown. As suggested in Fig. 6, the PTC heater has ideal properties for maintaining the surface temperature of the food holding plate structure.

A beneficial feature of the PTC heater is that it provides maximum heating power at low temperatures and then levels off to a sustaining power level over time as it develops an equilibrium with its thermal load. This is due to the fact that the resistance of the heating device increases with increasing temperature (Figure 3). As a result, the PTC heater is its own temperature controller. Since a separate sensor and controller are not needed, the cost of the overall device is reduced and several potential failure mechanisms are eliminated. Also, since the heater directly regulates its own temperature, efficiency is improved and the potential for overheating the food is eliminated.

While in the simplest example a separate temperature controlling mechanism is not needed when a PTC heater is used, additional functionality can be added to the device by using controllers, temperature sensors, and/or switches. For example, in order to increase the effective temperature/power range of the PTC device, a multiple stage heating buss can be designed, multiple PTC heaters used, or combinations of PTC and fixed resistance heaters used, such that various individual elements of the circuit or separate heaters can be individually powered to provide greater or lesser heating in locations as desired. These elements can also be switched between a parallel or series arrangement to provide even greater flexibility in power adjustment and heating capability. According to the invention, a temperature sensor and control device are incorporated that adjust any of the following to maintain a desired temperature set-point: the voltage to the heater, the number of heating elements activated, the series or parallel configuration of the heating circuit. Optionally, a variable voltage power supply could be incorporated to provide additional control over the working temperature of the food holding surface. The control device according to the invention may be programmed for multiple cooking phases of differing temperatures and time. Optionally, the temperature sensor could be a probe that is inserted into the food, allowing for the food temperature to be monitored or controlled directly.

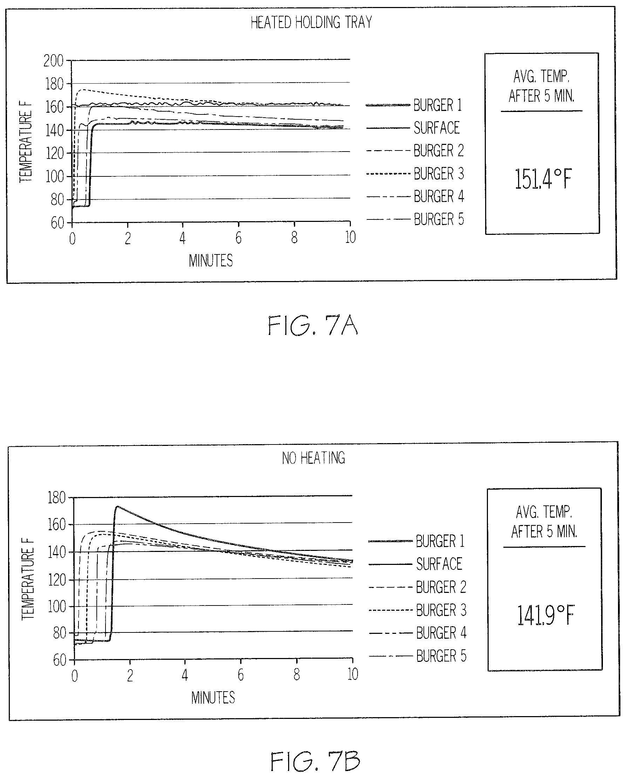

As shown in Figs. 7A and 7B, testing has demonstrated that the heated plate device is able to maintain the core temperature of cooked product, in this case hamburgers initially cooked to 165°F core temperature, at a desirable elevated temperature for several minutes longer than placing the product on a non-heated surface. This enables a longer working window for the restaurant in order to finish dressing the product for subsequent serving to the customer.

In one implementation, the subject food holding apparatus 10 holds food at a preset temperature using the heated upper surface 16 of plate 12, with a PTC heater mounted to or otherwise adjacent the underside of the plate. PTC heating can desirably provide only enough heat to maintain food temperature, avoiding excessive heating which can dry out the food. The use of PTC technology also allows for a highly energy efficient and cost effective design. Temperature controllers are not needed in such an implementation, thus eliminating a costly component of conventional hot plate heaters. Instead, PTC heaters are designed to deliver the desired surface temperature depending of the customer's need. Finally, the PTC heating eliminates temperature swings typical of closed loop sensor based heater control systems. The PTC heater, and in particular individual portions of the PTC heater, adjusts power demand based upon its temperature (as affected by the food load atop the plate) and delivers a precise temperature regardless of load at a given local on the plate surface. In some embodiments, the PTC heating element can be designed to deliver different levels of heat to different portions of the plate corresponding to food load, type and cooking/holding requirements. Thus, if food product located on a specific portion of the plate draws down the plate temperature, and thus the PTC material temperature, in the vicinity of the specific portion of the plate, more power will be delivered to the plate by that portion of the PTC heating element, thereby delivering more heat energy to the specific portion of the plate.

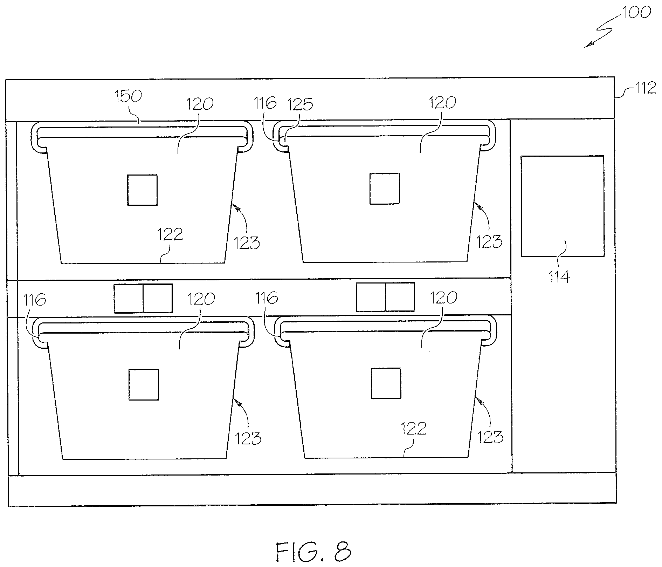

Referring now to Figs. 8-11, a food holding apparatus 100 that does not fall under the scope of the claims is illustrated that includes a heating device integrated with a food holding bin or tray to provide direct contact heating to the food product. The terms bin and tray may be used interchangeably herein and refer to structures with a bottom wall and one or more upwardly extending sidewalls, which structures can be used to hold and/or carry food products. The food holding apparatus 100 includes a cabinet 112 having a power source 114 and at least one support rail 116 (in many cases two spaced apart support rails) within the cabinet 112, and that acts as an elongated guide or support element of the cabinet. The support rail 116 can be referred to in the alternative as an upper carriage or carriage. In some embodiments, the power source 114 can be a low voltage power source (e.g., a 12V-48V DC power source). The food holding apparatus 100 has at least one food holding bin 120 that has at least one lip 125 (in many cases spaced apart lips on opposite sides of the bin) that acts as an elongated guide or support element for the bin. The food holding bin 120 engages with the support rail 116 of the cabinet 112 such that the lip 125 of the food holding bin 120 is supported by the support rail 116. In some embodiments, the cabinet 112 can have a plurality of support rails 116 to support a plurality of food holding bins 120.

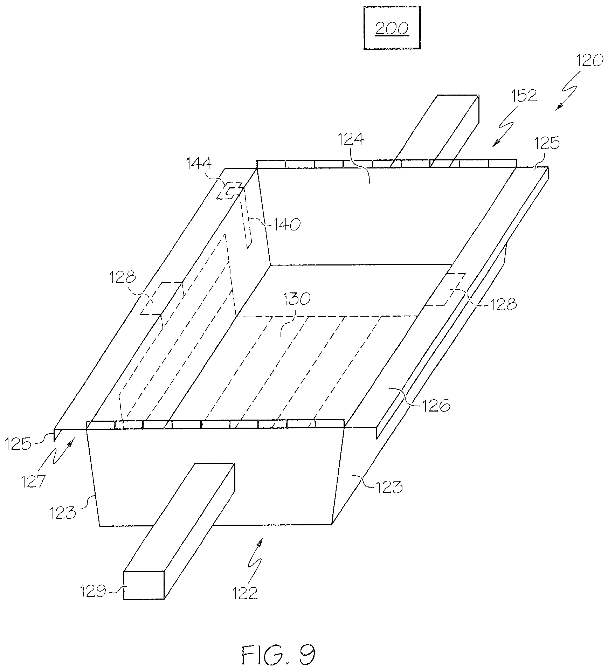

The food holding bin 120, which can also be referred to in the alternative as a pan, drawer or basket, includes a bottom wall 122 and multiple upright side walls 123. The bottom wall 122 and the plurality of upright side walls 123 together to form a food holding volume 124. In some embodiments, the food holding bin 120 can be a polymeric molded pan. The food holding bin 120 can have one or more lips 125 disposed around one or more upper portions of the multiple upright side walls 123. In some embodiments, the lip 125 extends along a single upright side wall 123. In other embodiments, the lip 125 can be disposed along more than one of the upright side walls 123. As shown in Fig. 9, the food holding bin 120 can have one or more handles 129 disposed on one or both ends of the food holding bin 120 so that the food holding bin 120 can be removed from or engaged with the cabinet from either side of the cabinet. The food holding bin 120 can have a heating element 130 associated with one or more of the bottom wall 122 or the multiple upright side walls 123. In some embodiments, the heating element 130 can be associated with the bottom wall 122. In other embodiments, similar to the embodiment shown in Fig. 9, the heating element 130 can be associated with the bottom wall 122 and at least one of the upright side walls 123. The heating element or elements 130 used may by PTC heaters as described above.

The heating element 130 can be attached to, inserted, or molded into a polymeric holding pan that serves as the food holding bin 120. This enables close contact of the food to the PTC heating element and establishes an equilibrium with the food and the heating device to maintain a constant temperature without overheating. Power can be received to the device via metal contacts that connect the holding pan and heater to an upper carriage mounted in the holding cabinet (e.g., electrical contacts 128 that engage when the food holding bin 120 is engaged with the support rail). Multiple contacts can be used in this arrangement to accommodate multi-circuit heaters or multiple individual heaters. Due to the low voltages employed in some embodiments, this connection may be intrinsically safe to the user and the bins may be easily washed and maintained.

As best seen in Fig. 9, the food holding bin 120 can have at least one lip 125 having an upper surface 126 and a lower surface 127. Generally, the lower surface 127 of the lip 125 is the surface that is supported by the support rail when the food holding bin 120 is engaged with the support rail. This lower surface 127 of the lip 125 or more bin electrical contacts 128 that are coupled to the heating element 130. In some embodiments, the food holding bin 120 can have a plurality of heating elements 130 and a plurality of bin electrical contacts 128 in the lower surface 127 of the lip 125. In some embodiments, bin electrical contacts 128 can be positioned in the lower surface 127 of more than one lip 125 of the food holding bin 120. The rail electrical contacts 118 can be positioned such that the bin electrical contacts 128 engage with corresponding sets of rail electrical contacts to form an electrical circuit with the power source to supply power to the heating element 130.

While in the simplest embodiment a separate temperature controlling mechanism is not needed, additional functionality can be added to the device/apparatus by using controllers, temperature sensors, and/or switches. For example, in order to increase the effective temperature/ power range of the PTC device, a multiple stage heating buss can be designed, multiple PTC heaters used, or combinations of PTC and fixed resistance heaters used, such that various individual elements of the circuit or separate heaters can be individually powered to provide greater or lesser heating as desired. These elements can also be switched between a parallel or series arrangement to provide even greater flexibility in power adjustment and heating capability. Optionally, a temperature sensor 140 and control device can be incorporated that adjusts any of the following to maintain a desired temperature set-point: the voltage to the heater, the number of heating elements activated, the series or parallel configuration of the heating circuit, or other system parameter. The control device can also have the ability to be programmed for multiple cooking phases of differing temperatures and time. Optionally, the temperature sensor 140 can be a probe that is inserted into the food, allowing for the food temperature to be monitored or controlled directly.

An exemplary embodiment of an optional temperature sensor is illustrated in Fig. 9. In some embodiments, one or more temperature sensors 140 can be installed in the food holding bin 120 in various configurations, some of which have been described above. Each temperature sensor 140 can be electrically coupled to a set of bin sensor contacts 144 disposed along the lower surface 127 of the lip 125 of the food holding bin 120. The bin sensor contacts 144 can be positioned such that they engage with a corresponding set of rail sensor contacts 146 to create an electrical circuit. The electrical circuit can include a controller (e.g., 200) configured to modulate the power supplied to the heating element in response to the temperature recorded by the temperature sensor 140. The controller can be a temperature switch, a PLC, computer, or any other control device (e.g., the term controller is also intended to broadly encompass any circuit (e.g., solid state, application specific integrated circuit (ASIC), an electronic circuit, a combinational logic circuit, a field programmable gate array (FPGA)), processor (e.g., shared, dedicated, or group - including hardware or software that executes code) or other component, or a combination of some or all of the above, that carries out the control functions of the machine or the control functions of any component thereof).

In some embodiments, the food holding bin 120 can be inserted into the holding cabinet by sliding it into the upper carriage (e.g. the support rail). The food storage bin can have handles and can be of a pass through design that allows the food storage bin to be loaded into the holding cabinet from either direction. The heating element 130 is then powered via a power supply installed in the holding cabinet which supplies power through the support rail/bin electrical contact area. When the holding bin is inside the cabinet, it can be effectively sealed on all sides by a cover or lid coupled to the cabinet or integrated with the upper carriage/support rail. Elastomeric seals can be added to the bin to prevent air leakage at the upper front and back edges. Optionally, a temperature sensor can be placed in the bin and actual temperature data can be transmitted electrically to the holding cabinet using another set of contacts.

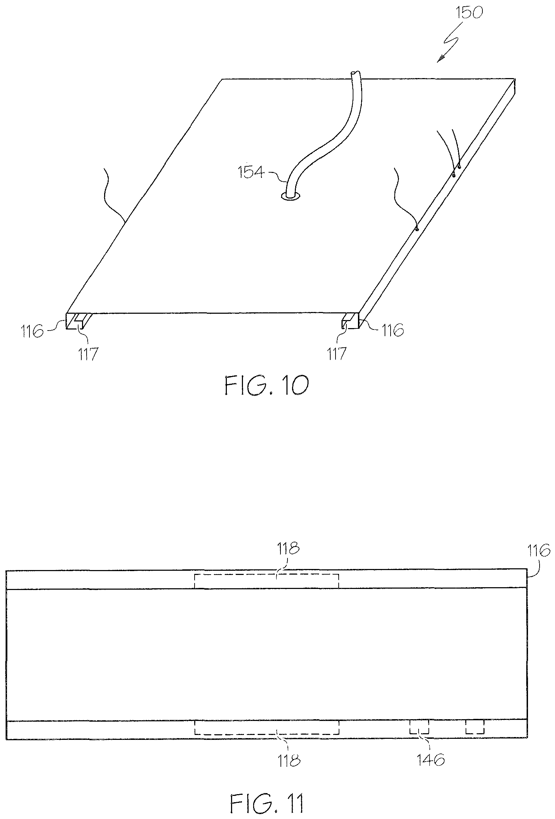

Referring now to Figs. 10 and 11, the support rail 116 is illustrated in further detail. The support rail 116 has an upper surface 117 on which can be disposed a rail electrical contact 118 and/or a rail sensor contact 126 in the event that an optional temperature sensor is installed in the food holding bin (not shown). In the embodiment shown in Fig. 10, multiple support rails 116 can be used to support the food holding bin. In some embodiments, the support rails 116 can be coupled to a cover 150 that is coupled to the cabinet. In some embodiments, the cover 150 and the support rails 116 can be independently coupled to the cabinet. As previously described, the food holding bin can have a seal to seal the food holding bin to the cover. In some embodiments, the cover is integral to the upper carriage and an air tight seal is formed upon insertion of the bin into the cabinet. In some embodiments, the cover 150 can have a seal along one or more edges to keep air from penetrating into the food holding bin when the food holding bin is engaged with the support rails 116. In some embodiments (not shown), the seal can be disposed along the upper surface of the lip of the food storage bin. The seal can be an elastomeric seal.

Optionally, steam can be injected into the food holding bin/pan via a steam port 154 in the upper carriage/support rail or the cover 150. In some embodiments, the steam port 154 can be disposed in the cover 154 that is coupled to the cabinet. The steam can further maintain the humidity in the pan and keep the food moist. The steam can be generated by a boiler or boiler-less steam generator located within the holding cabinet.

In an alternate embodiment, a standard resistance heater can be used as the heating element instead of a PTC heating device. In these embodiments, a temperature sensor and control circuit can be added to maintain a steady holding temperature. In yet another embodiment, the PTC heater can be external to the bin and can be mounted above the holding bin on the upper carriage/support rail, cabinet, cover/lid, or otherwise supported. Because the food holding compartment/bin may be sealed, certain embodiments of the device/apparatus can also be used to cook food, reheat precooked product from an ambient, refrigerated, or frozen state, or even to thaw frozen food prior to cooking in another device. Separate temperatures can be programmed into the device for thawing, preheating, cooking, or holding and the device can be programmed to hold these temperatures for various time periods as desired.

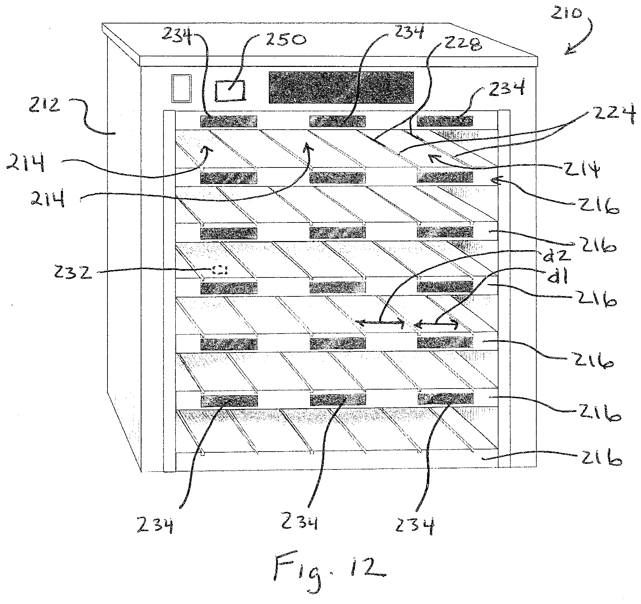

Referring now to Figs. 12-14, an embodiment according to the invention of a food holding apparatus or system 210 is illustrated that includes a heating device integrated with a food holding bin or tray to provide direct contact heating to the food products in the bin or tray. The food holding system 210 includes a cabinet 212 having a power source (e.g., a 12V-48V DC power source), and multiple bin receiving locations 214 within the cabinet 112. In the illustrated embodiment six vertically spaced apart support shelves 216 are provided, and each support shelf includes three bin receiving locations 214, for a total of eighteen, but other variations are possible.

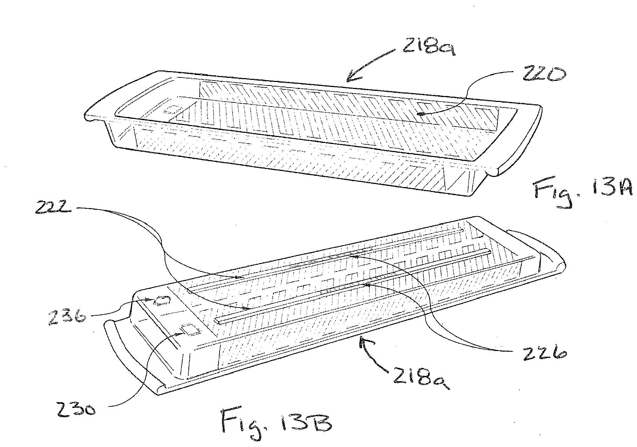

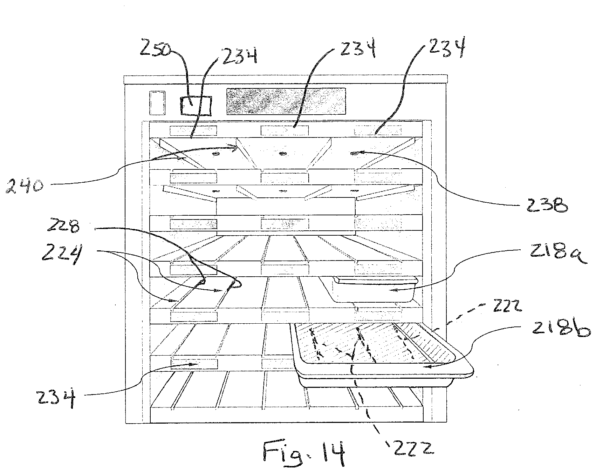

The system makes use of bin structures, such as bins 218a and 218b, that include one or more heating elements 220 embedded in the bin structure (e.g., where the bin structure is formed of a high temperature polymeric material such as polysulfone, polyphenylene sulfide, polyetherimide, polyamide, polyaryl sulfone, polyether ether ketone, polyphenlyene oxide, or other thermoplastic or thermoset material with sufficient thermal properties) or otherwise coupled to the bin structure. In the illustrated embodiment the heating element 220 is embedded with each of the bottom wall and the long side walls of the bin, but variations are possible, such as embedment within the bottom wall only. The underside of the bottom wall of each bin structure includes at least two elongated support elements and each bin receiving location likewise includes at least two corresponding elongated support elements. In the illustrated embodiment, the bin includes support elements in the form of the elongated guide rails 222 shown in Fig. 13B, and each bin receiving location 214 includes support elements in the form of elongated rail receiving slots 224. The rails 222 align with and slide within the slots 224 for positioning the bin in the bin receiving location. The bin structure includes a set of electrical contacts 226, and each bin receiving location includes a corresponding set of electrical contacts 228. Here, each contact 226 is located on and along one of the rails 222 (e.g., on a bottom or side of the rail), and each contact 228 is located within and along one of the slots 224 (e.g., on a bottom or side of the slot). When the bin is located in a holding position of the bin receiving location (e.g., as represented by the bin 218a in Fig. 14), the contacts of the bin align with and engaged the contacts of the bin receiving location to enable power (e.g., from the on board power source of the cabinet) to be delivered to the heating element(s) of the bin structure.

Notably, bin 218a is sized to fit within a single bin receiving location. On the other hand, bin 218b is of a larger size and overlaps into an adjacent bin receiving location 214. In this regard, bin 218b may include three rails 222 (represented by dashed lines in Fig. 14) rather than two, with the third rail aligning with and seating within a slot of the overlapped, adjacent bin receiving location 214. Where more than two rails are provided, the two outside rails 222 may be electrically coupled together, as the outside rails will engage the same polarity contact, regardless of the exact position of the bin 218b in the cabinet. That is, where the right slot 224 (when viewed from the front as in Fig. 14) of all of the bin receiving locations 214 is defined to include the positive contact and the left slot 224 of all bin receiving locations 214 is defined to include the negative contact, the contacts of the two outside rails 222 of the bin 218b will always engage contacts of the same polarity. In this regard, in one embodiment the horizontal spacing between each set of adjacent slots on any give vertical shelf level of the cabinet may be identical (e.g, the spacing d1 between slots of a given bin receiving location is the same as the spacing d2 between side by side slots of two side by side bin receiving locations), and the spacing between rails on the bottom of the bin structure may be the same as well. This configuration enables bin structure 218b to be positioned for operation at any one of four different lateral positions on any given shelf level. It is also recognized that larger bin structures with more than three rails could also be used in the system 210.

As suggested in Fig. 13B, the bin structure includes an identification unit 230 thereon that individually and distinctly identifies the bin as compared to any other bins being used in the system 210, and each bin receiving location includes a device 232 for reading the identification unit. For example, each identification unit 230 may be an identification chip incorporating identification data and the each device 232 may read or enable reading of the chip. In one example, where the identification chip is connected with an electrical contact or contacts, the device 232 may be a corresponding electrical contact or contacts to enable a controller 250 within the cabinet to read the chip data. In another example, where the identification chip include an RF antenna, the device 232 may be a corresponding RF reader to enable the controller 250 within the cabinet to read the chip data. Other variations that do not fall under the scope of the claims are possible. For example, the identification unit 230 may be a bar code, CRcode or numeric code (on a label or imprinted) and the device 232 may be an optical scanning device that reads the subject code.

Referring to Figs. 12 and 14, the cabinet includes a plurality of displays 234 (e.g., LCD or other type display screens). Each display 234 is associated with a respective bin receiving location 214. In the illustrated embodiment, each display 234 is located immediately above its corresponding bin receiving location, but variations are possible. The controller is configured such that, when a particular bin structure is in the holding position of a particular bin receiving location, the controller effects display of information regarding the bin structure on the display associated with the particular bin receiving location. For example, when the bin structure is located in the holding position of the particular bin receiving the identification unit 230 of the bin structure is read and the controller 250 is able to determine (e.g., by accessing a database or directly from the data of the identification unit 230) which bin structure is present and what type of food product is or should be within that bin structure. The controller also starts a timer when the bin structure is first moved into the holding position. The controller 250 can therefore effect display of food item type of the bin structure and a time period the bin structure has been located in the holding position of the particular bin receiving location. Food preparation personnel can therefore more readily determine which bin structure to pull depending upon the type of food product needed and/or the duration the bin structure has been within the cabinet.

The controller 250 may also be provided with more advanced functionality, such as a food hold limit functionality in which the controller 250 identifies a hold time limit (e.g., which may vary as between food product types) and effecting display of information relating to the hold time limit (e.g., flashing the corresponding display when a particular bin structure is near its hold time limit to communicate that the food product in the bin structure should be used promptly and/or displaying a limit exceeded message (e.g., DISPOSE) or indicator to reflect that the food product in the bin structure should no longer be used).

As seen in Fig. 13B the bin structure includes an integrated temperature sensor 236 (e.g., a thermocouple) that can be read by a suitable corresponding device in the cabinet using electrical contacts as those described above. In such cases the controller 250 can then also display actual temperature of the bin structure on the corresponding display 234 if desired.

As seen in Fig. 14, each bin receiving location may also include an associated overhead steam outlet 238 that can be used to deliver steam into a bin structure when in the holding position of the bin receiving location. In this regard, the controller 250 may be configured to selectively deliver steam into bin structures based upon various factors such as type of food product (e.g., cooked foods may receive steam and fried foods not) and/or monitored temperature of the bin structure (e.g., if for some reason the temperature is determined to be too low) and/or duration in the holding position (e.g., after a set or specified duration that may indicate a tendency for the food product to dry out).

As also seen in Fig. 14, each bin receiving location 214 may include overhead gaskets 240 for engaging upper edge portions of the bin structure when the bin structure in the holding position of the bin receiving location. The gaskets can help maintain the moisture level of the food product when being stored in the holding position.

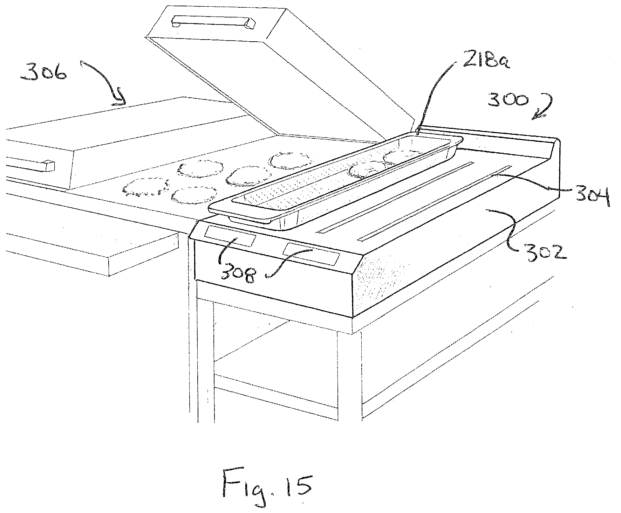

Referring now to Fig. 15, an alternative system 300 for temporary holding of food product is shown. The system utilizes bin structures 218a or 218b similar to those described above in combination with an open support unit 302 having an upper surface with rail receiving slots 304. The system 300 would be particularly useful for initial loading of bin structures as food is taken off of a cooking surface and/or for unloading of bin structures as the food product is used at a food preparation station 306. Individual displays 308 may also be provided for each bin receiving location of the unit 302.

It is to be clearly understood that the above description is intended by way of illustration and example only, is not intended to be taken by way of limitation, and that other changes and modifications are possible within the scope of the claims.

## Claims

1. A food holding apparatus, comprising:
- a food holding device (100) which is a bin structure (120); and
- a temperature sensor (140) and at least one heating element (130, 220) associated with the food holding device (100), wherein the heating element (130, 220) comprises a positive temperature coefficient heater (50') comprising an electrical resistance that increases with increasing temperature such that the positive temperature coefficient heater (50') provides higher heating power at lower temperatures and lower heating power at higher temperatures,
wherein the heating element (130, 220) is located adjacent an underside of a bottom wall (122) of the bin structure (120) or (ii) embedded within the bottom wall,
wherein the bin structure (120) further includes a set of bin electrical contacts (128) electrically coupled to the temperature sensor and conductively coupled to the heating element (130, 220) and wherein the apparatus further comprises a cabinet unit (112) with a power supply and multiple bin receiving locations (214), each bin receiving location (214) including a set of electrical contacts (228) arranged for mating with the bin electrical contacts (128) of the bin structure (120) when the bin structure (120) is located in a holding position of the bin receiving location (214), the food holding apparatus being further **characterized in that** it comprises a controller (200, 250) configured to adjust the voltage to the heater (50'), the number of heating elements (130, 220) activated, the series or parallel configuration of the heating circuit, or other system parameter to maintain a desired temperature set-point, wherein the controller (200, 250) may be programmed for multiple cooking phases of differing temperatures and time,
wherein the controller (200, 250) is electrically coupled to the temperature sensor (140) and the power supply, the controller modulating the power supply to the heating element (130, 220) in response to a temperature measured by the temperature sensor (140), the food holding apparatus being further **characterized in that** the bin structure (120) includes at least two elongated guide elements (222) along a lower side of a bottom wall (122) of the bin structure (120) and each bin receiving location (214) includes at least two elongated guide elements (224) along on an upper side of a support surface of the bin receiving location (214), wherein the elongated guide elements (222) of the bin structure (120) engage with the elongated guide elements (224) of the bin receiving location (214) when the bin structure (120) is in the holding position at the bin receiving location (214), wherein each elongated guide element (222) of the bin structure (120) includes a respective one of the electrical contacts (226) of the bin structure (120) thereon, and each elongated guide element (224) of each bin receiving location (214) includes a respective one of the electrical contacts (228) of the bin receiving location (214) thereon, and **in that** the bin structure (120) includes an identification unit (230) thereon and each bin receiving location (214) includes means (232) for reading the identification unit, wherein the identification unit (230) is an identification chip with an electrical contact interface or an RF interface, and each means (232) for reading the identification unit comprises an electrical contact at the bin receiving location (214) or an RF reader associated with the bin receiving location (214),
wherein the cabinet unit (112) includes a plurality of discrete displays (234), each display (234) associated with a respective bin receiving location (214), and a controller (250) configured such that, when the bin structure (120) is in the holding position of a particular bin receiving location (214), the controller (250) effects display of information regarding the bin structure (120) on the display (234) associated with the particular bin receiving location (214), and
wherein the controller (250) is configured to display at least food item type of the bin structure (120) and a time period the bin structure (120) has been located in the holding position of the particular bin receiving location (214).

2. The food holding apparatus of claim 1,
wherein the positive temperature coefficient heater (50') comprises:
- a film substrate;
- a conductive buss system (54, 56) supported by the film substrate; and
- a positive temperature coefficient material (52) overlaid on the conductive buss system (54, 56).

3. The food holding apparatus of one of the preceding claims,
wherein different portions of the positive temperature coefficient heater (50') are configured to deliver different amounts of heat to the food holding device (100) according to localized temperature.

4. The food holding apparatus of claim 1,
wherein each bin receiving location (214) includes an associated steam outlet (238).

5. The food holding apparatus of claim 1,
wherein each bin receiving location (214) includes overhead gaskets (240) for engaging upper edge portions of the bin structure (120) when the bin structure (120) in the holding position of the bin receiving location (214).

## Patentansprüche

1. Nahrungsmittelaufbewahrungsappart, aufweisend:
- eine Nahrungsmittelaufbewahrungsvorrichtung (100), die eine Behälterstruktur (120) ist; und
- einen Temperatursensor (140) und mindestens ein Heizelement (130, 220), das mit der Nahrungsmittelaufbewahrungsvorrichtung (100) verbunden ist, wobei das Heizelement (130, 220) einen Heizer (50') mit positivem Temperaturkoeffizienten aufweist, der einen elektrischen Widerstand aufweist, der mit zunehmender Temperatur zunimmt, sodass der Heizer (50') mit positivem Temperaturkoeffizienten eine höhere Heizleistung bei niedrigeren Temperaturen und eine niedrigere Heizleistung bei höheren Temperaturen bereitstellt,
wobei das Heizelement (130, 220) angrenzend an eine Unterseite einer Bodenwand (122) der Behälterstruktur (120) angeordnet oder (ii) in die Bodenwand eingebettet ist, wobei die Behälterstruktur (120) ferner einen Satz elektrischer Behälterkontakte (128) beinhaltet, die elektrisch mit dem Temperatursensor gekoppelt und leitend mit dem Heizelement (130, 220) gekoppelt sind, und wobei der Apparat ferner eine Schrankeinheit (112) mit einer Stromversorgung und mehreren Behälteraufnahmeorten (214) aufweist, wobei jeder Behälteraufnahmeort (214) einen Satz elektrischer Kontakte (228) beinhaltet, die zum Zusammenpassen mit den elektrischen Behälterkontakten (128) der Behälterstruktur (120) ausgelegt sind, wenn sich die Behälterstruktur (120) in einer Halteposition des Behälteraufnahmeorts (214) befindet, wobei der Nahrungsmittelaufbewahrungsapparat ferner **dadurch gekennzeichnet ist, dass** er aufweist:
eine Steuerung (200, 250), die konfiguriert ist, um die Spannung an den Heizer (50'), die Anzahl der aktivierten Heizelemente (130, 220), die Reihen- oder Parallelkonfiguration des Heizkreises oder einen anderen Systemparameter anzupassen, um einen gewünschten Temperatursollwert beizubehalten, wobei die Steuerung (200, 250) für mehrere Kochphasen unterschiedlicher Temperatur und Zeit programmiert sein kann,
wobei die Steuerung (200, 250) elektrisch mit dem Temperatursensor (140) und der Stromversorgung gekoppelt ist, wobei die Steuerung die Stromversorgung zu dem Heizelement (130, 220) in Reaktion auf eine Temperatur moduliert, die durch den Temperatursensor (140) gemessen wird,
wobei der Nahrungsmittelaufbewahrungsapparat ferner **dadurch gekennzeichnet ist, dass** die Behälterstruktur (120) mindestens zwei längliche Führungselemente (222) entlang einer Unterseite einer Bodenwand (122) der Behälterstruktur (120) beinhaltet und jeder Behälteraufnahmeort (214) mindestens zwei längliche Führungselemente (224) entlang einer Oberseite einer Stützfläche des Behälteraufnahmeorts (214) beinhaltet, wobei die länglichen Führungselemente (222) der Behälterstruktur (120) mit den länglichen Führungselementen (224) des Behälteraufnahmeorts (214) in Eingriff stehen, wenn sich die Behälterstruktur (120) in der Halteposition an dem Behälteraufnahmeort (214) befindet,
wobei jedes längliche Führungselement (222) der Behälterstruktur (120) einen entsprechenden der elektrischen Kontakte (226) der Behälterstruktur (120) darauf beinhaltet und jedes längliche Führungselement (224) jedes Behälteraufnahmeorts (214) einen entsprechenden der elektrischen Kontakte (228) des Behälteraufnahmeorts (214) darauf beinhaltet,
und dadurch, dass die Behälterstruktur (120) eine Identifikationseinheit (230) darauf beinhaltet und jeder Behälteraufnahmeort (214) Mittel (232) zum Lesen der Identifikationseinheit beinhaltet, wobei die Identifikationseinheit (230) ein Identifikationschip mit einer elektrischen Kontaktschnittstelle oder einer HF-Schnittstelle ist, und jedes Mittel (232) zum Lesen der Identifikationseinheit einen elektrischen Kontakt an dem Behälteraufnahmeort (214) oder einen HF-Leser, der mit dem Behälteraufnahmeort (214) assoziiert ist, aufweist,
wobei die Schrankeinheit (112) eine Mehrzahl von diskreten Anzeigen (234) umfasst, wobei jede Anzeige (234) mit einem jeweiligen Behälteraufnahmeort (214) verbunden ist, und eine Steuerung (250), die so konfiguriert ist, dass, wenn sich die Behälterstruktur (120) in der Halteposition eines bestimmten Behälteraufnahmeorts (214) befindet, die Steuerung (250) eine Anzeige von Informationen bezüglich der Behälterstruktur (120) auf der Anzeige (234) veranlasst, die mit dem bestimmten Behälteraufnahmeort (214) verbunden ist, und
wobei die Steuerung (250) konfiguriert ist, mindestens den Nahrungsmittelartikeltyp der Behälterstruktur (120) und einen Zeitraum anzuzeigen, über den sich die Behälterstruktur (120) in der Halteposition des bestimmten Behälteraufnahmeorts (214) befunden hat.

2. Nahrungsmittelaufbewahrungsapparat nach Anspruch 1, wobei der Heizer (50') mit positivem Temperaturkoeffizienten aufweist:
- ein Foliensubstrat;
- ein leitfähiges Bussystem (54, 56), das von dem Foliensubstrat getragen wird; und
- ein Material (52) mit positivem Temperaturkoeffizienten, das auf dem leitfähigen Bussystem (54, 56) überlagert ist.

3. Nahrungsmittelaufbewahrungsapparat nach einem der vorhergehenden Ansprüche,
wobei unterschiedliche Abschnitte des Heizers (50') mit positivem Temperaturkoeffizienten konfiguriert sind, um unterschiedliche Wärmemengen an die Nahrungsmittelaufbewahrungsvorrichtung (100) gemäß der lokalisierten Temperatur abzugeben.

4. Nahrungsmittelaufbewahrungsapparat nach Anspruch 1,
wobei jeder Behälteraufnahmeort (214) einen zugehörigen Dampfauslass (238) beinhaltet.

5. Nahrungsmittelaufbewahrungsapparat nach Anspruch 1,
wobei jeder Behälteraufnahmeort (214) Überkopfdichtungen (240) zum Eingriff mit oberen Randabschnitten der Behälterstruktur (120) beinhaltet, wenn sich die Behälterstruktur (120) in der Halteposition des Behälteraufnahmeorts (214) befindet.

## Revendications

1. Appareil de maintien d'aliments, comprenant :
- un dispositif de maintien d'aliments (100) qui est une structure de bac (120) ; et
- un capteur de température (140) et au moins un élément de chauffage (130, 220) associés au dispositif de maintien d'aliments (100), dans lequel l'élément de chauffage (130, 220) comprend un dispositif de chauffage à coefficient de température positif (50') comprenant une résistance électrique qui augmente avec l'augmentation de température de sorte que le dispositif de chauffage à coefficient de température positif (50') fournit une puissance de chauffage plus élevée à des températures inférieures et une puissance de chauffage plus faible à des températures supérieures,
dans lequel l'élément de chauffage (130, 220) est situé de manière adjacente à une face inférieure d'une paroi de fond (122) de la structure de bac (120) ou (ii) encastrée au sein de la paroi de fond,
dans lequel la structure de bac (120) comprend en outre un ensemble de contacts électriques de bac (128) couplés électriquement au capteur de température et couplés de manière conductrice à l'élément de chauffage (130, 220) et dans lequel l'appareil comprend en outre une unité d'armoire (112) avec une alimentation électrique et des emplacements de réception de bacs multiples (214), chaque emplacement de réception de bac (214) comportant un ensemble de contacts électriques (228) agencés pour s'accoupler avec les contacts électriques de bac (128) de la structure de bac (120) lorsque la structure de bac (120) est située dans une position de maintien de l'emplacement de réception de bac (214), l'appareil de maintien d'aliments étant en outre **caractérisé en ce qu'**il comprend
un dispositif de commande (200, 250) configuré pour régler la tension au dispositif de chauffage (50'), le nombre d'éléments de chauffage (130, 220) activés, la configuration en série ou en parallèle du circuit de chauffage, ou un autre paramètre du système pour conserver un point de consigne de température souhaité, dans lequel le dispositif de commande (200, 250) peut être programmé pour de multiples phases de cuisson de différentes températures et durées,
dans lequel le dispositif de commande (200, 250) est couplé électriquement au capteur de température (140) et à l'alimentation électrique, le dispositif de commande modulant la puissance alimentée vers l'élément de chauffage (130, 220) en réponse à une température mesurée par le capteur de température (140),
l'appareil de maintien d'aliments étant en outre **caractérisé en ce que** la structure de bac (120) comporte au moins deux éléments de guidage allongés (222) le long d'un côté inférieur d'une paroi de fond (122) de la structure de bac (120) et chaque emplacement de réception de bac (214) comporte au moins deux éléments de guidage allongés (224) le long d'un côté supérieur d'une surface de support de l'emplacement de réception de bac (214), dans lequel les éléments de guidage allongés (222) de la structure de bac (120) viennent en prise avec les éléments de guidage allongés (224) de l'emplacement de réception de bac (214) lorsque la structure de bac (120) est dans la position de maintien au niveau de l'emplacement de réception de bac (214), dans lequel chaque élément de guidage allongé (222) de la structure de bac (120) comporte l'un respectif parmi les contacts électriques (226) de la structure de bac (120) sur celui-ci, et chaque élément de guidage allongé (224) de chaque emplacement de réception de bac (214) comporte l'un respectif parmi les contacts électriques (228) de l'emplacement de réception de bac (214) sur celui-ci,
et **en ce que** la structure de bac (120) comporte une unité d'identification (230) sur celle-ci et chaque emplacement de réception de bac (214) comporte un moyen (232) pour lire l'unité d'identification, dans lequel l'unité d'identification (230) est une puce d'identification avec une interface de contact électrique ou une interface RF, et chaque moyen (232) pour lire l'unité d'identification comprend un contact électrique au niveau de l'emplacement de réception de bac (214) ou un lecteur RF associé à l'emplacement de réception de bac (214),
dans lequel l'unité d'armoire (112) comporte une pluralité d'affichages (234) discrets, chaque affichage (234) étant associé à un emplacement de réception de bac (214) respectif, et un dispositif de commande (250) configuré de telle sorte que, lorsque la structure de bac (120) est dans la position de maintien d'un emplacement de réception de bac (214) particulier, le dispositif de commande (250) effectue l'affichage d'informations concernant la structure de bac (120) sur l'affichage (234) associé à l'emplacement de réception de bac (214) particulier, et
dans lequel le dispositif de commande (250) est configuré pour afficher au moins le type d'article alimentaire de la structure de bac (120) et une période pendant laquelle la structure de bac (120) a été située dans la position de maintien de l'emplacement de réception de bac (214) particulier.

2. Appareil de maintien d'aliments selon la revendication 1, dans lequel le dispositif de chauffage à coefficient de température positif (50') comprend :
- un substrat en film ;
- un système de bus conducteur (54, 56) supporté par le substrat en film ; et
- un matériau à coefficient de température positif (52) superposé sur le système de bus conducteur (54, 56).

3. Appareil de maintien d'aliments selon l'une quelconque des revendications précédentes,
dans lequel différentes portions du dispositif de chauffage à coefficient de température positif (50') sont configurées pour délivrer différentes quantités de chaleur au dispositif de maintien d'aliments (100) selon une température localisée.

4. Appareil de maintien d'aliments selon la revendication 1,
dans lequel chaque emplacement de réception de bac (214) comporte une sortie de vapeur associée (238).

5. Appareil de maintien d'aliments selon la revendication 1,
dans lequel chaque emplacement de réception de bac (214) comporte des joints aériens (240) pour mettre en prise des portions de bord supérieur de la structure de bac (120) lorsque la structure de bac (120) est dans la position de maintien de l'emplacement de réception de bac (214).
